# EUROPÄISCHE PATENTSCHRIFT

(11) **EP 3 706 248 B1**
(45) Veröffentlichungstag und Bekanntmachung des Hinweises auf die Patenterteilung: **11.10.2023**
(21) Anmeldenummer: 20000095.8
(22) Anmeldetag: 04.03.2020
(51) Int. Cl.: H01R 9/03, H02G 15/10, H02G 3/16, H01R 4/2429, H01R 4/2483, H01R 13/595, H02G 15/113

(54) **VERTEILERGEHÄUSE**
DISTRIBUTOR HOUSING
BOITIER DE DISTRIBUTION

(30) Priorität: 06.03.2019 DE 102019105693
(43) Veröffentlichungstag der Anmeldung: 09.09.2020
(73) Patentinhaber: Harting Customised Solutions GmbH & Co. KG, 32339 Espelkamp (DE)
(72) Erfinder: Vaske, Jan, 32339 Espelkamp (DE)

(56) Entgegenhaltungen:
- EP-A1- 0 928 044
- EP-A1- 1 369 956
- EP-A2- 1 575 136
- GB-A- 1 258 470
- US-B2- 7 491 084

## Beschreibung

Die Erfindung geht aus von einem zur Energieverteilung nutzbaren Verteilergehäuse nach der Gattung des unabhängigen Anspruchs 1.

Derartige Verteilergehäuse werden benötigt, um dezentrale elektrische Energieverteilungen zu ermöglichen.

### Stand der Technik

Im Stand der Technik ist eine Vielzahl von Anschlussboxen für elektrische Energieverteilungen bekannt. Über die im Heimgebrauch weit verbreiteten sogenannte "Steckerleisten" hinaus, finden im industriellen Bereich auch teilweise sehr komplexe Verteilerboxen Verwendung, die dazu dienen, Energieverteilungen, welche auch oft Energie- und Signalleitungen umfassen, möglichst strukturiert über dezentrale Uriterverteilungen aufzubauen.

Ein Nachteil bei diesen bekannten Verteilerboxen besteht darin, dass sie für viele Anwendungen, insbesondere in einem vorgegebenen Raum, zu wenige Anschlüsse aufweisen.

Die EP 1 369 956 A1 zeigt ein Abzweiggehäuse für Kabelleiter. Das Abzweiggehäuse weist eine Kabeleingangsöffnung, in welche ein mehradriges Kabel einführbar ist, und eine Kabelausgangsöffnung auf, durch welche das mehradrige Kabel aus dem Verteilergehäuse herausführbar ist. Innerhalb des Gehäuses werden die eigeführten mit den ausgeführten Leitern mithilfe geeigneter Kontaktierungsmittel verbunden. Die einlaufenden und auslaufenden Leiter verlaufen innerhalb des Gehäuses linear. Die verknüpften Leiter befinden sich allesamt auf derselben Ebene und sind dort parallel zueinander ausgerichtet.

Die EP 0 928 044 A1 zeigt eine elektrische Kabelabzweigklemme, wie sie beispielsweise in Abzweiggehäusen verwendet wird.

Die EP 1 575 136 A2 zeigt eine Abzweigvorrichtung zum elektrisch leitenden Verbinden eines Hauptkabels mit einem Nebenkabel. Die Abzweigvorrichtung besitzt Kontaktierungselemente mit einer Schneidklemme zum Kontaktieren der Hauptkabeladern und zum Herstellen einer elektrischen Verbindung zu Kontaktstellen einer Buchse, in welche ein Leiter des Nebenkabels einsteckbar ist. Die Kontaktierungselemente besitzen einen mit der Schneidklemme elektrisch verbundenen Klemmkontakt, welcher flach ist und lokal eine Ebene definiert, wobei eine Klemmwirkung des Klemmkontakts durch entlang der Ebene wirkende Federkräfte entsteht.

Die US 7,491,084 B2 zeigt ein Anschluss-System mit mehreren Anschluss-Vorrichtungen zur Realisierung von Abzweigungen an einer Mehrzahl durchgehender elektrischer Leiter, insbesondere eines abschnittsweise abgemantelten Kabels. Auf die Leiter werden Anschluss-Scheiben zur elektrischen Kontaktierung von einem der Leiter mit einem Abzweigleiter aufgesetzt.

Die DE 20 2005 019 522 U1 zeigt ein Verteilergehäuse welches mehrere Abzweigkontakte für ein durchlaufendes, mehradriges Kabel bietet. Die Abzweigungsleiter erhalten jedoch an den Abzweigkontakten keinerlei Zugentlastung, so dass eine solche Anordnung, insbesondere in rauen Industrieumgebungen, Potential für technische Ausfälle bereitstellt. Das Verteilergehäuse der DE 20 2005 019 522 U1 ist außerdem hoch aufbauend, was in engen Installationsbereichen Schwierigkeiten mit sich bringt.

Daher besteht im Stand der Technik der Nachteil, dass die Anschlussboxen im Betrieb oft Ausfallpotential bieten. Insbesondere bauen sie zusammen mit eingesteckten Anschlusssteckern und der dazugehörigen Verkabelung in ihren mechanischen Abmessungen für viele Anwendungen zu hoch auf.

### Aufgabenstellung

Die Aufgabe der Erfindung besteht darin, diese Probleme zu überwinden und ein elektrisches Verteilergehäuse bereitzustellen, welches platzsparend, einfach zu installieren und sicher zu betreiben ist.

Die Aufgabe wird durch den Gegenstand des unabhängigen Anspruchs 1 gelöst.

Vorteilhafte Ausgestaltungen der Erfindung sind in den Unteransprüchen und der folgenden Beschreibung angegeben.

Das in dieser Schrift gezeigte Verteilergehäuse dient zur Realisierung von Abzweigungen an einer Mehrzahl von durchgehenden Leitern eines mehradrigen Kabels, ohne die durchgehenden Leiter durchtrennen zu müssen.

Das erfindungsgemäße Verteilergehäuse dient insbesondere zur Energieverteilung, wobei unter Energieverteilung insbesondere das Abzweigen von elektrischen Strömen von stromdurchflossenen Leitern verstanden wird.

Das Verteilergehäuse weist eine Kabeleingangsöffnung auf. In die Kabeleingangsöffnung wird ein mehradriges Kabel in das Verteilergehäuse eingeführt. Das Verteilergehäuse weist eine Kabelausgangsöffnung auf, durch welche das mehradrige Kabel wieder aus dem Verteilergehäuse herausgeführt wird. Dieses mehradrige Kabel stellt beispielsweise ein Hauptversorgungskabel einer Industrieumgebung dar. Von einem solchen Hauptversorgungskabel müssen beispielsweise verschiedene Industriesysteme mit Energie versorgt werden.

Erfindungsgemäß weist das Verteilergehäuse Führungen auf, in welchen die einzelnen Leiter des mehradrigen Kabels eingelegt sind. Über die Führungen werden die Leiter innerhalb des Verteilergehäuses aufgefächert. Die einzelnen Leiter verlaufen innerhalb des Verteilergehäuses S-förmig oder, je nach Blickwinkel, spiegelverkehrt S-förmig.

Das Verteilergehäuse weist Anschlusskontakte auf. Mithilfe der Anschlusskontakte werden die einzelnen Leiter des mehradrigen Kabels innerhalb des Verteilergehäuses elektrisch leitend kontaktiert.

Das Verteilergehäuse weist Abzweigkontakte auf, die mit den Anschlusskontakten elektrisch leitend verbunden sind. Die Verbindung kann beispielsweise über einen metallischen Steg hergestellt werden.

Das Verteilergehäuse weist zumindest zwei Abzweigöffnungen auf, zwischen denen mehrere Abzweigungsleiter verlaufen. Die Abzweigungsleiter sind jeweils mit einem Zweiganschlusskontakt elektrisch leitend verbunden.

Vorteilhafterweise handelt es sich bei den Anschlusskontakten jeweils um Schneidklemmen-Kontakte. Die Funktion von Schneidklemmen-Kontakten ist beispielsweise aus der DE 10 2017 120 180 B3 bekannt. Mithilfe von Schneidklemmen-Kontakten können die isolierenden Mäntel von Leitern durchdrungen werden, um eine elektrisch leitende Verbindung zwischen Leiter und Schneidklemmen-Kontakt herzustellen. Eine derartige Kontaktierung ist einfach zu realisieren, erfordert kein Spezialwerkzeug und ist daher für den industriellen Bereich sehr geeignet.

Vorzugsweise bestehen die Abzweigkontakte jeweils aus einer Kombination von Schneidklemmen-Kontakten und Einpressschrauben, Dabei werden die Abzweigungsleiter auf den gabelartigen Einführungsbereich der Schneidklemmen-Kontakte positioniert und über die Einpressschrauben in die Schneidklemmen-Kontakte eingepresst.

Idealerweise bestehen die Anschlusskontakte und die Abzweigkontakte, exklusive der Einpressschrauben, jeweils aus einem einzigen Werkstück. Die Einführbereiche der jeweiligen Schneidklemmen-Kontakte sind entgegengesetzt zueinander ausgerichtet.

In einer besonders vorteilhaften Ausgestaltung der Erfindung weist das Verteilergehäuse eine Kontaktplatte auf. Die Anschlusskontakte und die Abzweigkontakte sind in der Kontaktplatte eingebettet. Die Position der Anschlusskontakte innerhalb der Kontaktplatte ist auf die Position der in den Führungen positionierten Leiter des mehradrigen Kabels abgestimmt. Beim Einlegen bzw. Einpressen der Kontaktplatte in das Verteilergehäuse werden die Leiter des mehradrigen Kabels über die Anschlusskontakte, die in diesem Fall als Schneidklemmen-Kontakte ausgeführt sind, kontaktiert.

Vorzugsweise ist die Kontaktplatte im Verteilergehäuse verrastbar oder fixierbar. Dadurch wird eine zuverlässige elektrische Kontaktierung der Leiter des durchlaufenden, mehradrigen Kabels gewährleistet.

Vorzugsweise weisen die Leiter des mehradrigen Kabels und die Abzweigungsleiter einen Leiterquerschnitt von 2,5 mm² bis zu 10 mm² auf, wobei die Randbereiche ausdrücklich im Intervall eingeschlossen sind. Ein derartiger Leiterquerschnittsbereich bietet eine große Flexibilität bei der Installation des erfindungsgemäßen Verteilergehäuses.

Es ist vorteilhaft, wenn zumindest eine Abzweigöffnung mit einem Durchlasselastomer versehen ist. Hierbei kann es sich beispielsweise um ein Durchlassgummi handeln. Das Durchlasselastomer kann die gesamte Abzweigöffnung im Wesentlichen verschließen und lediglich einen Schlitz für das Einführen eines mehradrigen Kabels und/oder mehrerer einzelnen Leiter bieten. Eine derartige Lösung ist besonders kostengünstig und stellt in der Regel ausreichenden Schutz gegen das Eindringen von Medien bereit, bietet allerdings keine Zugentlastung für das Kabel und/oder die Leiter.

Vorzugsweise weist zumindest eine Abzweigöffnung eine Steckbuchse oder einen Steckverbinder auf. Durch diese Variante können einfach Systeme zur Energieabgreifung über passende Steckverbinder an das Verteilergehäuse angeschlossen werden.

Die Abzweigöffnungen können natürlich unterschiedlich ausgestaltet sein. Beispielsweise kann eine Abzweigöffnung mit einem Durchlasselastomer und eine andere Abzweigöffnung mit einer Steckbuchse oder einem Steckverbinder bestückt sein.

Vorteilhafterweise weist die Kabeleingangsöffnung und die Kabelausgangsöffnung jeweils eine Kabelverschraubung inklusive Kabelzugentlastung auf. Diese Variante bietet einen besonderen Schutz für das durchlaufende Kabel und das Verteilergehäuse. Das Verteilergehäuse ist gegen ein Eindringen von Medien geschützt. Die Zugentlastung stellt einen Schutz für das durchlaufende Kabel dar.

### Ausführungsbeispiel

Ein Ausführungsbeispiel der Erfindung ist in den Zeichnungen dargestellt und wird im Folgenden näher erläutert. Es zeigen:
- Fig. 1: eine offene Darstellung eines erfindungsgemäßen Verteilergehäuses mit einem durchlaufenden, mehradrigen Kabel, jedoch ohne Anschlusskontakte, Abzweigkontakte und Gehäusedeckel,
- Fig. 2: eine Draufsicht auf eine Kontaktplatte, die die Anschlusskontakte und die Abzweigkontakte umfasst,
- Fig. 3: eine offene Darstellung eines erfindungsgemäßen Verteilergehäuses mit eingesetzter Kontaktplatte und
- Fig. 4: eine schematische Funktionszeichnung des Verteilergehäuses.

Die Figuren enthalten teilweise vereinfachte, schematische Darstellungen: Zum Teil werden für gleiche, aber gegebenenfalls nicht identische Elemente identische Bezugszeichen verwendet. Verschiedene Ansichten gleicher Elemente könnten unterschiedlich skaliert sein.

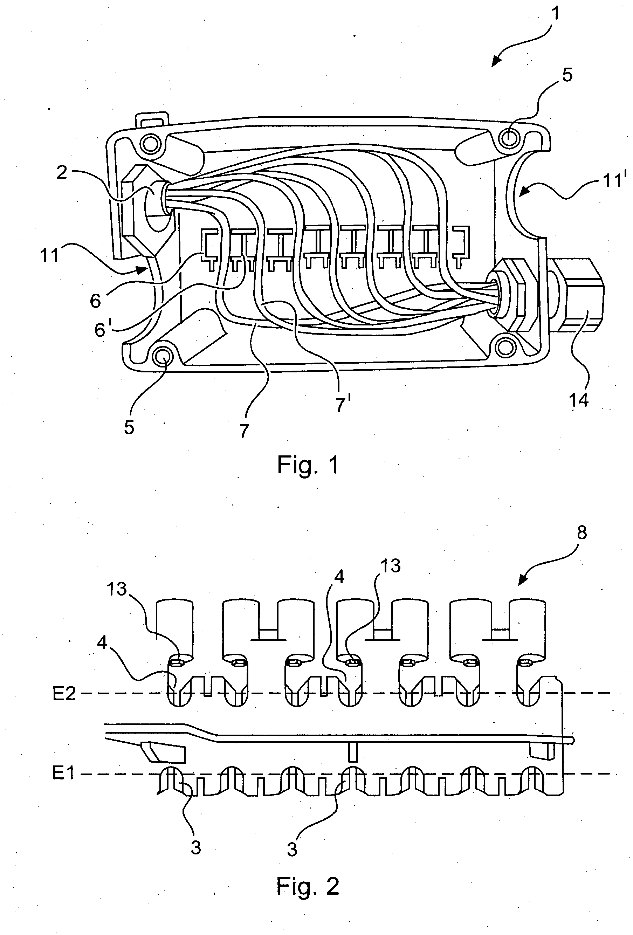

Die Figur 1 zeigt eine offene Darstellung eines erfindungsgemäßen Verteilergehäuses 1 mit einem durchlaufenden, mehradrigen Kabel 2..Aus Verständnisgründen werden die Anschlusskontakte 3, Abzweigkontakte 4 zunächst nicht gezeigt. Ein passender Gehäusedeckel kann über die Schrauböffnungen 5 befestigt werden. Auf die Darstellung eines Gehäusedeckels wird im Folgenden aus darstellerischen Gründen gänzlich verzichtet.

Das Verteilergehäuse 1 weist eine Kabeleingangsöffnung 9 auf, durch welche das mehradrige Kabel 2 in das Verteilergehäuse 1 hineingeführt wird. Das Verteilergehäuse 1 weist eine Kabelausgangsöffnung 10 auf, durch welche das mehradrige Kabel 2 aus dem Verteilergehäuse 1 herausgeführt wird. Innerhalb des Verteilergehäuses 1 ist der Kabelmantel des mehradrigen Kabels 2 entfernt worden. Die einzelnen Leiter 7, 7' können dadurch aufgegliedert bzw. aufgefächert werden.

Die Leiter 7 des mehradrigen Kabels 2 werden innerhalb des Verteilergehäuses 1 in Führungen 6, 6' eingelegt. Die einzelnen Leiter 7 verlaufen S-förmig oder, je nach Blickwinkel, spiegelverkehrt S-förmig innerhalb des Verteilergehäuses 1. Dieser Verlauf ist besonders platzsparend und vereinfacht die Verlegung der Leiter für einen Installateur.

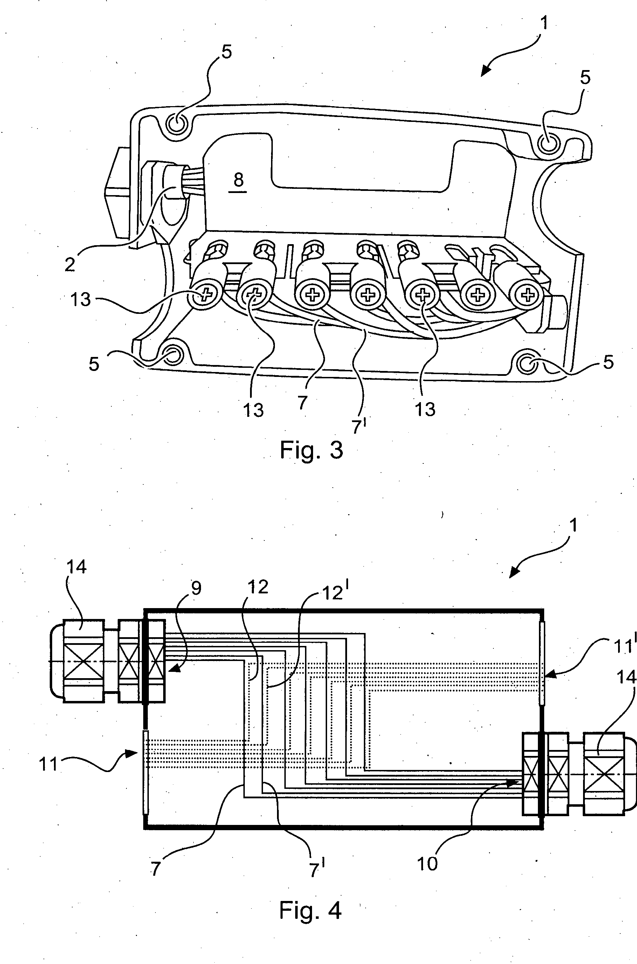

Auf die Leiter 7, 7' des mehradrigen Kabels 2 wird eine Kontaktplatte 8 (Figur 2) anschlussseitig aufgesetzt bzw. aufgepresst, wobei die Kontaktplatte 8 die Anschlusskontakte 3 und die Abzweigkontakte 4 umfasst. Diese Installationssituation wird in Figur 3 dargestellt. Hierbei durchdringen die Schneidklemmen-Kontakte (Anschlusskontakte 3) den isolierenden Mantel der jeweiligen Leiter 7, 7' und stellen dadurch eine elektrisch leitende Verbindung zwischen Anschlusskontakt 3 und zugehörigem Leiter 7, 7' her.

Anschlusskontakt 3 und Abzweigkontakt 4 sind über einen metallischen Steg (nicht zu sehen) miteinander elektrisch leitend verbunden, so dass die elektrische Kontaktierung der Leiter 7, 7' des durchlaufenden, mehradrigen Kabels 7, 7' bis zum jeweils zugehörigen Abzweigkontakt 4 reicht. Kurz gesagt, über den Abzweigkontakt 4 können elektrische Ströme bzw. Stromphasen und Signale des jeweils zugehörigen Leiters 7, 7' abgegriffen werden.

Zwischen den beiden Abzweigöffnungen 11, 11' des Verteilergehäuses 1 verlaufen die Abzweigungsleiter 12, 12'. Die Abzweigungsleiter 12, 12' werden jeweils elektrisch leitend mit den Abzweigungskontakten 4 kontaktiert, indem sie in den Einführbereich der jeweiligen Schneidklemmen-Kontakte eingelegt werden und über eine Einpressschraube 13 in den Schneidbereich des Schneidklemmen-Kontakts gepresst werden. Die Abzweigungsleiter 12, 12' verlaufen, aus Blickwinkel der Figur 4, S-förmig innerhalb des Verteilergehäuses 1.

Auf einer Schmalseite des Verteilergehäuses 1 befindet sich die Kabeleingangsöffnung 9 und eine Abzweigöffnung 11. Auf der gegenüberliegenden Schmalseite des Verteilergehäuses 1 befindet sich die Kabelausgangsöffnung 10 und eine Abzweigöffnung 11'. Die Kabeleingangsöffnung 9 und die Kabelausgangsöffnung 10 sind versetzt zueinander angeordnet. Selbiges gilt für die Abzweigöffnungen 11, 11'.

Die Anschlusskontakte 3 der Kontaktplatte 8 befinden sich innerhalb des Verteilergehäuses 1 auf einer unteren, ersten Ebene E1. Die Abzweigkontakte 4 befinden sich innerhalb des Verteilergehäuses 1 auf einer oberen, zweiten Ebene E2. Die beiden Ebenen E1, E2 sind parallel zueinander ausgerichtet.

Die über die Anschlusskoritakte kontaktierten Leiter 7, 7' des mehradrigen Kabels 2 verlaufen S-förmig (oder spiegelverkehrt S-förmig) auf der unteren, ersten Ebene E1 innerhalb des Verteilergehäuses 1. Die über die Abzweigkontakte 4 kontaktierten Abzweigleiter 12, 12' verlaufen S-förmig auf der oberen, zweiten Ebene E2 innerhalb des Verteilergehäuses 1. Durch die im eingebauten Zustand auf zwei unterschiedlichen Ebenen E1, E2 verlaufende S-Kreuzung der Leiter 7, 7' und der Abzweigleiter 12, 12' kann eine übersichtliche, aber dennoch platzsparende Leiterführung innerhalb des Verteilergehäuses 1 realisiert werden.

Die Kabeleingangsöffnung 9 und die Kabelausgangsöffnung 10 ist jeweils mit einer Kabelverschraubung 14 versehen. An den Abzweigöffnungen 11, 11' kann wahlweise eine Durchlassdichtung, eine Steckbuchse oder ein Steckverbinder vorgesehen sein.

### Bezugszeichenliste

- 1: Verteilergehäuse
- 2: Mehradriges Kabel
- 3: Anschlusskontakt
- 4: Abzweigkontakt
- 5: Schrauböffnung
- 6: Führung
- 7: Leiter des mehradrigen Kabels
- 8: Kontaktplatte
- 9: Kabeleingangsöffnung
- 10: Kabelausgangsöffnung
- 11: Abzweigöffnung
- 12: Abzweigungsleiter
- 13: Einpressschraube
- 14: Kabelverschraubung

- E1: Erste Ebene
- E2: Zweite Ebene

## Patentansprüche

1. Verteilergehäuse (1) zur elektrischen Energieverteilung,
- wobei das Verteilergehäuse (1) eine Kabeleingangsöffnung (9) aufweist, in welche ein mehradriges Kabel (2) in das Verteilergehäuse (1) einführbar ist,
- wobei das Verteilergehäuse (1) eine Kabelausgangsöffnung (10) aufweist, durch welche das mehradrige Kabel (2) aus dem Verteilergehäuse (1) herausführbar ist,
- wobei das Verteilergehäuse (1) Anschlusskontakte (3) aufweist, mit welchen jeweils einzelne Leiter (7, 7') des mehradrigen Kabels (2) elektrisch köntaktierbar sind,
- wobei das Verteilergehäuse (1) Abzweigkontakte (4) aufweist, die mit den Anschlusskontakten (3) elektrisch leitend verbunden sind,
- wobei das Verteilergehäuse (1) zumindest zwei Abzweigöffnungen (11, 11') aufweist, zwischen denen mehrere Abzweigungsleiter (12, 12') verlaufbar sind, wobei die Abzweigungsleiter (12, 12') jeweils mit einem Abzweigkontakt (4) elektrisch leitend verbindbar sind.
**dadurch gekennzeichnet, dass**
sich die Leiter (7, 7') des mehradrigen Kabels (2) und die Abzweigungsleiter (12, 12') innerhalb des Verteilergehäuses (1) auf unterschiedlichen Ebenen (E1, E2) kreuzen, wobei die Leiter (7, 7') des mehradrigen Kabels (2) S-förmig oder spiegelverkehrt S-förmig auf einer unteren, ersten Ebene (E1) innerhalb des Verteilergehäuses (1) und die über die Abzweigkontakte (4) kontaktierten Abzweigungsleiter (12, 12') entsprechend umgekehrt, also spiegelverkehrt S-förmig oder S-förmig, auf einer oberen, zweiten Ebene (E2) innerhalb des Verteilergehäuses (1) verlaufen.

2. Verteilergehäuse nach Anspruch 1
**dadurch gekennzeichnet, dass**
das Verteilergehäuse (1) Führungen (6, 6') aufweist, in welchen die einzelnen Leiter (7, 7') des mehradrigen Kabels (2) einlegbar sind.

3. Verteilergehäuse nach einem der vorstehenden Ansprüche
**dadurch gekennzeichnet, dass**
das Verteilergehäuse (1) eine Kontaktplatte (8) aufweist und die Anschlusskontakte (3) und die Abzweigkontakte (4) in der Kontaktplatte (8) eingebettet sind.

4. Verteilergehäuse nach vorstehendem Anspruch
**dadurch gekennzeichnet, dass**
die Kontaktplatte (8) ein separates Bauteil ist und im Verteilergehäuse (1) verrastbar oder fixierbar ist.

5. Verteilergehäuse nach einem der vorstehenden Ansprüche **dadurch gekennzeichnet, dass**
die Anschlusskontakte (3) Schneidklemmen-Kontakte sind.

6. Verteilergehäuse nach einem der vorstehenden Ansprüche
**dadurch gekennzeichnet, dass**
die Abzweigkontakte (4) jeweils aus einer Kombination von Schneidklemmen-Kontakten und Einpressschrauben (13) bestehen, wobei die Abzweigungsleiter (12, 12') über die Einpressschrauben (13) in die Schneidklemmen-Kontakte einpressbar sind.

7. Verteilergehäuse nach einem der beiden vorstehenden Ansprüche **dadurch gekennzeichnet, dass**
die Schneidklemmen-Kontakte derart ausgeführt sind, dass sie jeweils Leiter (7, 7') oder Abzweigungsleiter (12, 12') mit einem Leiterquerschnitt von 2,5 mm² bis zu 10 mm² aufnehmen können.

8. Verteilergehäuse nach einem der vorstehenden Ansprüche
**dadurch gekennzeichnet, dass**
zumindest eine Abzweigöffnung (11, 11') mit einem Durchlasselastomer versehen ist.

9. Verteilergehäuse nach einem der vorstehenden Ansprüche
**dadurch gekennzeichnet, dass**
zumindest eine Abzweigöffnung (11, 11') eine Steckbuchse oder einen Steckverbinder aufweist.

10. Verteilergehäuse nach einem der vorstehenden Ansprüche
**dadurch gekennzeichnet, dass**
die Kabeleingangsöffnung (9) und die Kabelausgangsöffnung (10) jeweils eine Kabelverschraubung (14) inklusive Kabelzugentlastung aufweisen.

## Claims

1. Distributor housing (1) for electrical energy distribution,
- wherein the distributor housing (1) has a cable inlet opening (9) into which a multicore cable (2) can be inserted into the distributor housing (1),
- wherein the distributor housing (1) has a cable outlet opening (10), through which the multicore cable (2) can be led out of the distributor housing (1),
- wherein the distributor housing (1) has connection contacts (3), with which respective individual conductors (7, 7') of the multicore cable (2) can be contacted electrically,
- wherein the distributor housing (1) has branch contacts (4), which are electrically conductively connected to the connection contacts (3),
- wherein the distributor housing (1) has at least two branch openings (11, 11'), between which a plurality of branch conductors (12, 12') can be run, wherein the branch conductors (12, 12') can each be electrically conductively connected to a branch contact (4),
**characterized in that**
the conductors (7, 7') of the multicore cable (2) and the branch conductors (12, 12') cross on different planes (E1, E2) within the distributor housing (1), wherein the conductors (7, 7') of the multicore cable (2) run in an S shape or mirror-reversed S shape on a lower, first plane (E1) within the distributor housing (1), and the branch conductors ,(12, 12') contacted by the branch contacts (4) run correspondingly reversed, that is to say in a mirror-reversed S shape or S-shape, on an upper, second plane (E2) within the distributor housing (1).

2. Distributor housing according to Claim 1,
**characterized in that**
the distributor housing (1) has guides (6, 6')-into which the individual conductors (7, 7') of the multicore cable (2) can be inserted.

3. Distributor housing according to one of the preceding claims,
**characterized in that**
the distributor housing (1) has a contact plate (8) and the connection contacts (3) and the branch contacts (4) are embedded in the contact plate (8).

4. Distributor housing according to the preceding claim,
**characterized in that**
the contact plate (8) is a separate component and can be latched or fixed in the distributor housing (1).

5. Distributor housing according to one of the preceding claims,
**characterized in that**
the connection contacts (3) are insulation displacement contacts.

6. Distributor housing according to one of the preceding claims,
**characterized in that**
the branch contacts (4) each comprise a combination of insulation displacement contacts and press-in screws (13), wherein the branch conductors (12, 12') can be pressed into the insulation displacement contacts via the press-in screws (13).

7. Distributor housing according to one of the two preceding claims,
**characterized in that**
the insulation displacement contacts are designed in such a way that they can each accommodate conductors (7, 7') or branch conductors (12, 12') having a conductor cross section of 2.5 mm² up to 10 mm².

8. Distributor housing according to one of the preceding claims,
**characterized in that**
at least one branch opening (11, 11') is provided with a passage elastomer.

9. Distributor housing according to one of the preceding claims,
**characterized in that**
at least one branch opening (11, 11') has a socket or a plug connector.

10. Distributor housing according to one of the preceding claims,
**characterized in that**
the cable inlet opening (9) and the cable outlet opening (10) each have a cable gland (14) including cable strain relief.

## Revendications

1. Boîtier de distribution (1) pour la distribution d'énergie électrique,
- le boîtier de distribution (1) présentant une ouverture (9) d'entrée de câble dans laquelle un câble multiconducteur (2) est apte à être introduit dans le boîtier de distribution (1),
- le boîtier de distribution (1) présentant une ouverture (10) de sortie de câble à travers laquelle le câble multiconducteur (2) est apte à être sorti du boîtier de distribution (1),
- le boîtier de distribution (1) présentant des contacts de raccordement (3) avec lesquels des conducteurs individuels (7, 7') du câble multiconducteur (2) sont aptes à être mis en contact électrique de façon respective,
- le boîtier de distribution (1) présentant des contacts de dérivation (4) qui sont électriquement connectés aux contacts de raccordement (3),
- le boîtier de distribution (1) présentant au moins deux ouvertures de dérivation (11, 11')entre lesquelles sont aptes à s'étendre plusieurs conducteurs de dérivation (12, 12'), les conducteurs de dérivation (12, 12') étant chacun aptes à être reliés électriquement à un contact de dérivation (4),
**caractérisé en ce que**
les conducteurs (7, 7') du câble multiconducteur (2) et les conducteurs de dérivation (12, 12') se croisent à l'intérieur du boîtier de distribution (1) sur différents plans (E1, E2), les conducteurs (7, 7') du câble multiconducteur (2) étant en forme de S ou en forme de S inversé sur un plan inférieur, (E1) à l'intérieur du boîtier de distribution (1) et les conducteurs de dérivation (12, 12') contactés par les contacts de dérivation (4) s'étendant de manière correspondante en sens inverse, c'est-à-dire en forme de S inversé ou en forme de S, sur un deuxième plan supérieur- (E2) à l'intérieur du boîtier de distribution (1).

2. Boîtier de distribution selon la revendication 1
**caractérisé en ce que**
le boîtier de distribution (1) présente des guides (6, 6') dans lesquels les différents conducteurs (7, 7') du câble multiconducteur (2) sont aptes à être insérés.

3. Boîtier de distribution selon l'une des revendications précédentes,
**caractérisé en ce que**
le boîtier de distribution (1) présente une plaque de contact (8) et **en ce que** les contacts de raccordement (3) et les contacts de dérivation (4) sont encastrés dans la plaque de contact (8).

4. Boîtier de distribution selon la revendication précédente
**caractérisé en ce que**
la plaque de contact (8) est un composant séparé et est apte à être encliquetée ou fixée dans le boîtier de distribution (1).

5. Boîtier de distribution selon l'une des revendications précédentes,
**caractérisé en ce que**
les contacts de raccordement (3) sont des contacts auto-dénudants.

6. Boîtier de distribution selon l'une des revendications précédentes,
**caractérisé en ce que**
les contacts de dérivation (4) sont constitués chacun d'une combinaison de contacts auto-dénudants et de vis d'insertion (13), les conducteurs de dérivation (12, 12') étant aptes à être insérés par pression dans les contacts auto-dénudants par l'intermédiaire des vis d'insertion (13).

7. Boîtier de distribution selon l'une des deux revendications précédentes,
**caractérisé en ce que**
les contacts auto-dénudants sont réalisés de telle sorte qu'ils sont aptes à recevoir chacun des conducteurs (7, 7') ou des conducteurs de dérivation (12, 12') ayant une section de conducteur de 2,5 mm² à 10 mm².

8. Boîtier de distribution selon l'une des revendications précédentes,
**caractérisé en ce que**
au moins une ouverture de dérivation (11, 11') est pourvue d'un élastomère de passage.

9. Boîtier de distribution selon l'une des revendications précédentes.
**caractérisé en ce que**
au moins une ouverture de dérivation (11, 11') comporte une douille ou un connecteur.

10. Boîtier de distribution selon l'une des revendications précédentes,
**caractérisé en ce que**
l'ouverture (9) d'entrée de câble et l'ouverture (10) de sortie de câble présentent chacune un presse-étoupe (14) incluant un serre-câble.
